Europäisches Patentamt

European Patent Office

Office européen des brevets

(11) Numéro de publication : **0 434 490 B1**

# (12) FASCICULE DE BREVET EUROPEEN

(45) Date de publication du fascicule du brevet :
26.10.94 Bulletin 94/43

(51) Int. Cl.$^5$ : **H02P 9/04,** F02D 25/02

(21) Numéro de dépôt : **90403431.1**

(22) Date de dépôt : **03.12.90**

---

(54) **Dispositif de commande du fonctionnement d'au moins deux moteurs thermiques accouplés sur un même arbre d'entraînement d'un alternateur.**

---

(30) Priorité : **19.12.89 FR 8916818**

(43) Date de publication de la demande :
**26.06.91 Bulletin 91/26**

(45) Mention de la délivrance du brevet :
**26.10.94 Bulletin 94/43**

(84) Etats contractants désignés :
**BE CH DE ES GB LI NL SE**

(56) Documents cités :
**DE-B- 1 526 518**
**FR-A- 2 495 688**
**US-A- 4 498 016**
**SOVIET INV. ILLUSTRATED, Derwent**
**Publ.Ltd., Section Electrique, Week 8510,**
**Numéro d'abrégé 060580, Q52, 17 Avril 1985; &**
**SU-A-1105674 (LENAVTOREMONT ASSOC) 30**
**Juil. 1984**

(73) Titulaire : **FRAMATOME**
**Tour Fiat**
**1, Place de la Coupole**
**F-92400 Courbevoie (FR)**

(72) Inventeur : **Pugnet, Jean-Marc**
**12 Avenue Charles de Gaulle**
**F-71200 Le Creusot (FR)**

(74) Mandataire : **Habasque, Etienne Joel**
**Jean-François et al**
**Cabinet Lavoix**
**2, Place d'Estienne d'Orves**
**F-75441 Paris Cédex 09 (FR)**

---

## Description

La présente invention concerne un dispositif de commande du fonctionnement d'au moins deux moteurs thermiques accouplés sur un même arbre d'entraînement d'un alternateur.

Ces moteurs et cet alternateur sont par exemple utilisés dans des groupes électrogènes de secours de l'état de la technique pour la fourniture d'électricité. Ces groupes comportent un régulateur de vitesse de rotation unique pour les deux moteurs, qui commande deux actionneurs de réglage de la position d'un organe de commande de l'injection de carburant dans chaque moteur.

Les actionneurs sont connectés en série à la sortie du régulateur pour recevoir le même courant afin d'obtenir un réglage de position correspondant des deux organes de commande d'injection de carburant, ceci pour équilibrer la répartition en statique de la charge sur les deux moteurs, sans problème dynamique, ni pompage.

Cependant, les actionneurs n'étant pas fidèles, du fait de leur conception, la répartition de charge entre les deux moteurs est plus ou moins aléatoire et les écarts observés ne sont pas admissibles.

On connait également dans l'état de la technique, un autre dispositif de commande qui comporte deux régulateurs de vitesse qui sont pilotés par une balance d'équilibrage de charge de façon à obtenir une égalité des puissances délivrées par les moteurs.

Cependant, ce dispositif nécessite un ensemble d'appareillages relativement complexe et encombrant, diminuant la fiabilité de cet ensemble et augmentant son prix de fabrication. Dans le document FR-A-2 495 688, chaque actionneur dispose d'un méchanisme d'asservissement. Un comparateur unique élabore pour chaque méchanisme d'asservissement un signal de connection à partir de la comparaison des positions des organes de commande entre elles.

Le but de l'invention est donc de résoudre ces problèmes en proposant un dispositif de commande qui soit simple, fiable, peu encombrant et qui permette d'obtenir un équilibre de la répartition en statique de la charge sur les deux moteurs.

A cet effet, l'invention a pour objet un dispositif de commande du fonctionnement d'au moins deux moteurs thermiques accouplés sur un même arbre d'entraînement d'un alternateur, comportant des moyens de régulation de la vitesse de rotation des moteurs et des moyens de réglage de la position d'un organe de commande de l'injection de carburant dans chaque moteur, commandés à partir d'un signal de sortie des moyens de régulation, caractérisé en ce qu'il comporte des moyens d'asservissement en boucle fermée pour chaque organe de commande recevant en entrée le même signal de sortie des moyens de régulation ce qui permet d'asservir la position de chaque organe de commande au même signal de sortie des moyens de régulation.

Avantageusement, les moyens d'asservissement sont à correcteur du type intégral.

Selon d'autres caractéristiques, les moyens d'asservissement comprennent, pour chaque moteur, des moyens de détermination de la position réelle de l'organe de commande correspondant et des moyens de comparaison du signal de sortie de ces moyens de détermination à un signal de sortie des moyens de régulation, représentatif de la position théorique voulue, la sortie des moyens de comparaison étant reliée aux moyens de réglage pour compenser tout écart entre les positions réelle et théorique voulue.

Avantageusement également, les moyens d'asservissement de chaque organe de commande reçoivent le même signal de sortie des moyens de régulation.

L'invention sera mieux comprise à l'aide de la description qui va suivre, donnée uniquement à titre d'exemple et faite en se référant aux dessins annexés, sur lesquels:

- la Fig. 1 représente un schéma synoptique illustrant un premier mode de réalisatin d'un dispositif de commande de l'état de la technique;
- la Fig. 2 représente un schéma synoptique illustrant un second mode de réalisation d'un dispositif de commande de l'état de la technique;
- la Fig. 3 représente un schéma synoptique illustrant un dispositif de commande selon l'invention;
- la Fig. 4 représente un schéma synoptique illustrant le fonctionnement d'un groupe électrogène équipé d'un dispositif de commande selon l'invention;
- la Fig. 5 représente un schéma synoptique illustrant une boucle d'asservissement de position, d'un dispositif de commande selon l'invention;
- la Fig. 6 représente un schéma synoptique d'une boucle d'asservissement du dispositif de commande selon l'invention, pour une application particulière; et
- les Fig. 7 et 8 représentent respectivement un diagramme de BLACK et un diagramme de BODE du mode de réalisation du dispositif selon l'invention, représenté sur la Fig. 6.

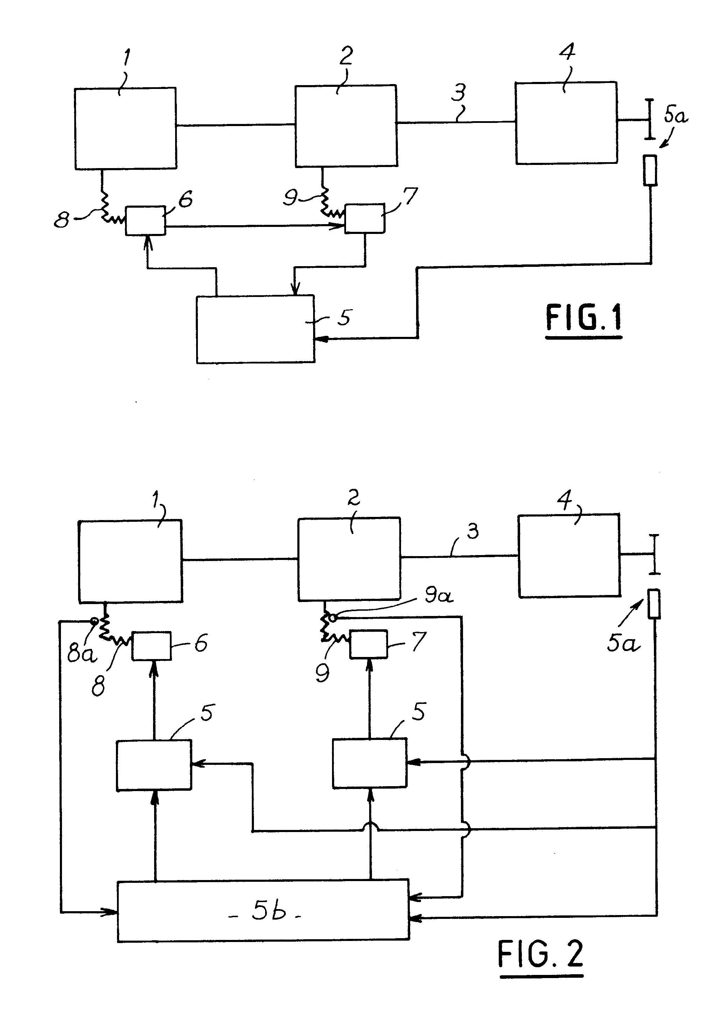

Ainsi qu'on peut le voir sur la Fig. 1, un premier mode de réalisation d'un groupe électrogène de secours de l'état de la technique, comporte par exemple deux moteurs thermiques 1 et 2 respectivement, accouplés sur un même arbre d'entraînement 3 d'un alternateur 4.

Ainsi qu'on l'a mentionné précédemment, ce groupe comporte également un régulateur de vitesse unique

EP 0 434 490 B1

5 qui commande deux actionneurs proportionnels respectivement 6 et 7, en fonction de la mesure de la vitesse de rotation du groupe, délivrée par un capteur 5a.

Ces actionneurs constituent des moyens de réglage de la position d'un organe 8, 9 de commande de l'injection de carburant dans chaque moteur, constitué par exemple par une crémaillère de commande pour chaque moteur.

Dans l'état de la technique, ces actionneurs 6, 7 sont connectés en série à la sortie du régulateur 5 pour recevoir le même courant et donc théoriquement assurer un positionnement identique des crémaillères afin d'obtenir une répartition équilibrée de la charge sur les moteurs.

Ainsi qu'on l'a mentionné précédemment, les actionneurs ne sont pas fidèles et la répartition de la charge n'est pas équilibrée entre les deux moteurs.

Selon un second mode de réalisation représenté sur la Fig. 2, les dispositifs de commande de l'état de la technique peuvent également comporter une balance 5b d'équilibrage des charges, agissant sur un régulateur 5 associé à chaque moteur.

Cette balance 5b reçoit des informations concernant la vitesse de rotation du groupe à partir du capteur 5a et la position des organes 8, 9 de commande de l'injection de carburant dans chaque moteur 1 et 2, à partir de capteurs de position 8a et 9a.

Ainsi qu'on l'a mentionné précédemment, ces dispositifs sont relativement encombrants et peu fiables.

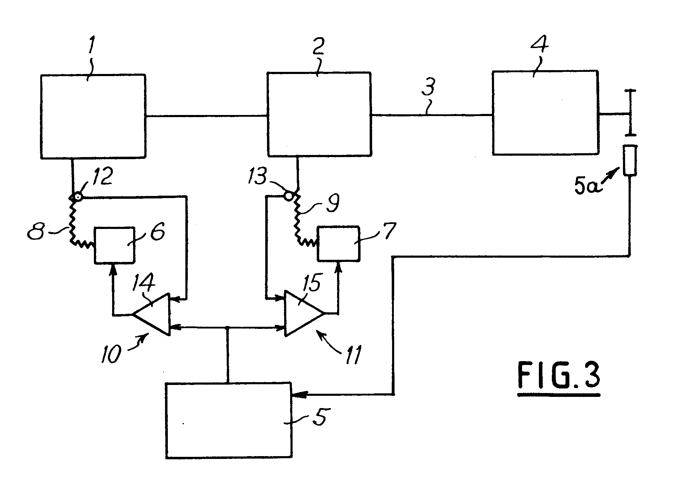

Pour résoudre ces problèmes, le dispositif de commande selon l'invention, représenté sur la Fig. 3, comporte des moyens, respectivement 10 et 11, d'asservissement en boucle fermée de la position de chaque organe de commande 8, 9, au signal de sortie des moyens de régulation 5.

Ces moyens d'asservissement sont interposés entre les moyens de régulation 5 et les actionneurs, respectivement 6 et 7, agissant sur les organes de commande d'injection de carburant dans les moteurs 1 et 2.

Selon un mode de réalisation, les moyens d'asservissement comprennent, pour chaque moteur, des moyens, respectivement 12 et 13, de détermination de la position réelle de l'organe de commande correspondant, par exemple 8 ou 9, et des moyens de comparaison respectivement 14 et 15, du signal de sortie de ces moyens de détermination à un signal de sortie des moyens de régulation 5, ce signal étant représentatif de la position théorique voulue.

La sortie des moyens de comparaison 14 et 15 est reliée aux actionneurs 6 et 7 constituant les moyens de réglage, pour compenser tout écart entre les positions réelle et théorique voulue.

On conçoit donc que dans ce mode de réalisation, les moyens d'asservissement de chaque organe de commande reçoivent le même signal de sortie des moyens de régulation 5.

Ainsi, on réalise pour chaque organe de commande un véritable asservissement de position en boucle fermée en utilisant des actionneurs de l'état de la technique qui fonctionnaient en boucle ouverte.

De cette façon, l'écart de position entre les deux organes et donc l'écart de puissance délivrée par les moteurs réglés de façon identique, se ramènent à la précision de mesure des capteurs constituant les moyens de détermination de la position réelle des organes de commande et à la précision de l'asservissement qui peut être rendue excellente en utilisant un correcteur de type intégral.

A titre d'exemple de réalisation, on peut utiliser un régulateur de vitesse du type électronique analogique 2301A fabriqué par la société WOODWARD GOVERNOR COMPANY et des actionneurs électromécaniques proportionnels du type 3199 fabriqués par cette même société, dans le dispositif selon l'invention.

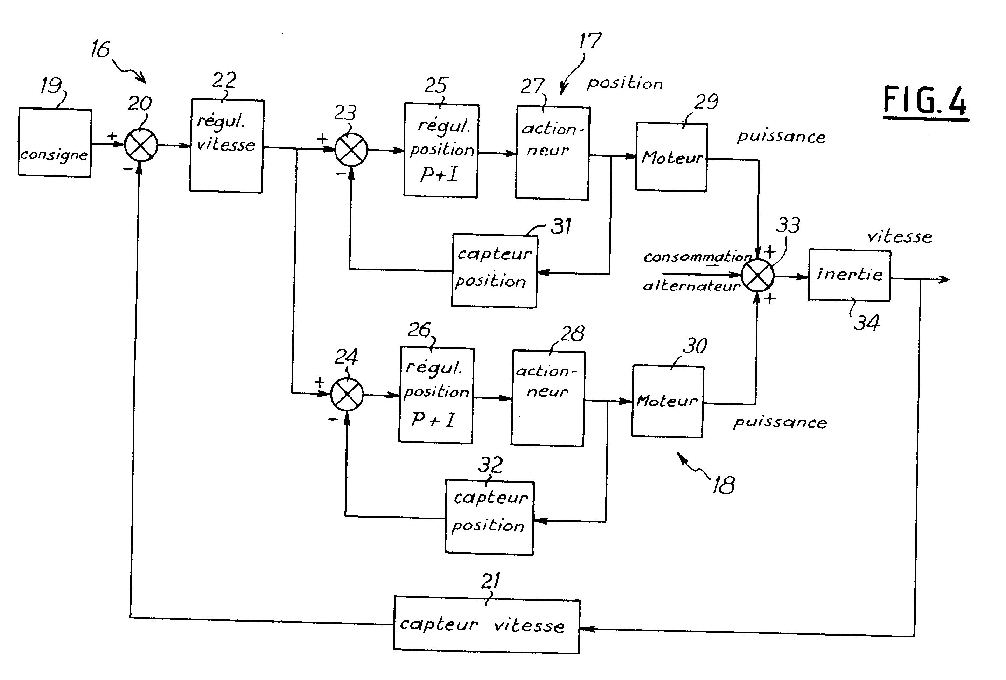

Un schéma synoptique illustrant le fonctionnement d'un groupe équipé d'un dispositif de commande selon l'invention est représenté sur la Fig. 4.

Ce schéma synoptique comporte trois servomécanismes bouclés, respectivement 16, 17 et 18. Le premier système bouclé 16 consiste en une régulation générale de vitesse à partir d'une valeur de consigne indiquée en 19 qui fixe la fréquence du courant électrique débité par l'alternateur. Cette valeur de consigne est appliquée à une entrée de moyens de comparaison 20 dont l'autre entrée reçoit une information à partir d'au moins un capteur de vitesse 21 indiquant la vitesse de rotation du groupe. Cette boucle fonctionne en régulation pour maintenir la vitesse du groupe constante.

La sortie des moyens de comparaison 20 est reliée à des moyens de régulation de vitesse constitués par exemple par le régulateur du type 2301A indiqué précédemment et désigné par la référence 22.

La sortie de ce régulateur est reliée aux deux boucles d'asservissement 17 et 18 pour l'asservissement de la position de l'organe de commande de l'injection de carburant dans chaque moteur, au signal de sortie des moyens de régulation. Les asservissements 17 et 18 sont réalisés par l'intermédiaire de moyens de réglage de position commandés à partir du signal de sortie des moyens de régulation.

Ainsi, les moyens de réglage de la position de l'organe de commande de l'injection de carburant dans chaque moteur sont commandés à partir d'un signal de sortie unique des moyens de régulation.

Chaque boucle comporte des moyens de comparaison, respectivement 23 et 24, recevant sur une entrée la sortie des moyens de régulation 22. La sortie des moyens de comparaison 23 et 24 est reliée à des moyens

3

de régulation de position, respectivement 25 et 26, dont la sortie est reliée aux moyens de réglage de la position de l'organe de commande, constitués par exemple par les actionneurs 27 et 28.

La sortie de ces moyens de réglage est reliée d'une part à l'organe de commande de l'injection de carburant dans chaque moteur, désignés respectivement par les références 29 et 30, et d'autre part à des moyens 31 et 32 de détermination de la position de cet organe de commande dont la sortie est reliée à l'autre entrée des moyens de comparaison respectivement 23 et 24, de manière à assurer l'asservissement en boucle fermée de la position de ces organes de commande, au signal de sortie des moyens de régulation.

Ainsi, il est possible de compenser tout écart entre les positions réelle et théorique voulue de ces organes de commande.

Les sorties des blocs 29 et 30 sont reliées à deux entrées d'un additionneur ou sommateur 33 dont une autre entrée reçoit une information concernant la consommation sur l'alternateur, la sortie de cet additionneur 33 étant reliée à un bloc 34 illustrant l'inertie de l'ensemble.

La sortie de ce bloc 34 est reliée à l'entrée du capteur de vitesse 21 mentionné précédemment pour refermer la boucle d'asservissement de vitesse générale.

L'injection de carburant dans les moteurs 29 et 30 détermine les puissances que délivrent ces moteurs.

l'inertie mécanique 34 de la ligne d'arbre est soumise aux deux couples d'entraînement des moteurs 29 et 30 et au couple résistant de l'alternateur, correspondant à la puissance des auxiliaires branchés à ses bornes. Cette différence de couple est déterminée par l'additionneur 33 et s'applique à l'entrée du bloc d'inertie 34 dont il résulte des variations de vitesse du groupe.

La mesure de la vitesse de rotation est donnée par le capteur de vitesse 21 mentionné précédemment pour refermer la boucle de régulation de vitesse générale.

La consommation de l'alternateur constitue l'élément de perturbation de la boucle de régulation 16.

Dans le cas où le groupe électrogène est utilisé comme unité de secours qui nécessite un démarrage très rapide, il est important que les moyens de régulation de position 25 et 26 disposent d'une désaturation d'action intégrale.

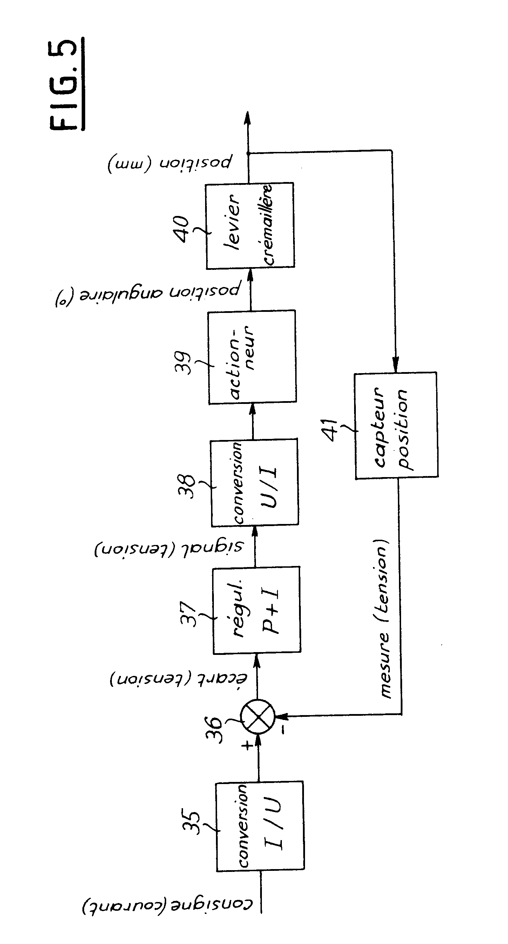

La Fig. 5 représente un schéma synoptique plus détaillé de la boucle d'asservissement de la position de chaque organe de commande, au signal de sortie des moyens de régulation.

La sortie des moyens de régulation est appliquée par exemple à un convertisseur de courant/tension 35 dont la sortie est reliée à l'entrée d'un comparateur 36 correspondant au comparateur 23 ou 24 mentionné en regard de la Fig. 4.

La sortie de ce comparateur 36 est reliée à l'entrée de moyens de régulation 37 dont la sortie est reliée à des moyens de conversion tension/courant 38. La sortie de ces moyens de conversion est reliée aux moyens de réglage 39 de la position de l'organe 40 de commande de l'injection de carburant dans chaque moteur, ces moyens de réglage étant constitués par exemple par un actionneur du type 3199 comme mentionné précédemment et l'organe de commande étant constitué par exemple par une crémaillère de commande.

La sortie de ce bloc 40 est reliée à l'entrée d'un capteur de position 41 correspondant au capteur de position 31 ou 32 de la Fig. 4, ce capteur de position étant relié à l'autre entrée des moyens de comparaison 36.

La suite de la description est une modélisation des moyens décrits précédemment pour étudier plus en détail le fonctionnement de tels moyens d'asservissement avec le matériel particulier évoqué.

On a indiqué précédemment que le régulateur de vitesse pouvait être constitué par un régulateur du type 2301A fabriqué par la société WOODWARD dont le courant de sortie varie de 20 à 160 mA sur un ou deux actionneurs dont l'impédance d'entrée est comprise entre 30 et 35 ohms.

Les actionneurs peuvent être constitués par des actionneurs du type 3199 fabriqués par cette même société, qui présentent une impédance d'entrée de 30 à 35 ohms, une constante de temps de 70 à 90 ms, dont l'entrée varie de 20 à 160 mA et dont l'angle utilisé est de 21,7° en sortie rotative.

Les capteurs de position utilisés peuvent être des capteurs fabriqués par la société SCHAEVITZ dont la sortie varie de 0 à 10 V (ou de 4 à 20 mA) pour une course de 0 à 40 mm avec une course de crémaillère de 26 mm (correspondant aux 21,7° de rotation de l'arbre de commande de l'actionneur). Ce capteur de position peut être du type LVDT avec un modulateur-démodulateur fonctionnant à 3,5 KHertz.

La boucle d'asservissement peut par exemple être modélisée pour effectuer des tests sur la chaîne d'asservissement de position de chaque crémaillère.

Ainsi par exemple, le convertisseur courant-tension d'entrée peut débiter sur une résistance de 30 ohms correspondant à l'impédance d'un actionneur du type 3199 mentionné précédemment.

La tension aux bornes de cette résistance sert de point de consigne aux deux chaînes d'asservissement pour ne pas avoir de décalage lié aux dérives thermiques.

Le cas échéant, ces dérives thermiques de la résistance peuvent être compensées par l'action inté-grale du régulateur du type 2301A mentionné précédemment.

Cette conversion d'entrée peut être complétée par une amplification de coefficient 1,67 permettant de disposer d'une consigne variant de 0 à 10 Volts en fonction du signal de sortie du régulateur, variant entre 0 et 200 mA. Ceci permet d'obtenir un coefficient $\alpha$ :

$$\alpha = 0,03 \times 1,67 = 0,05 \text{ Volts par mA.}$$

Les capteurs de position peuvent être réglés pour obtenir des signaux variant entre 0 et 200 mA pour une course variant de 0 à 40 mm.

La course utile de la crémaillère s'étend sur 26 mm que l'on suppose centrée dans la plage du capteur et on utilise donc un courant utile dont la plage de variation s'étend sur 13 mA. Ce courant doit être transformé en tension pour une comparaison avec le signal de consigne. Il est possible de prendre la tension aux bornes d'une résistance de précision de 600 ohms afin de rester en sortie du régulateur à un courant maximum inférieur à 160 mA. Le transfert déplacement/mesure correspond alors à:

$$\frac{20}{40} \times 0,6 = 0,3 \text{ V/mm}$$

L'amplificateur de courant assurant la conversion de la tension de sortie du régulateur de position (0 à 10 V) en courant de commande de l'actionneur 3199 (jusqu'à 200 mA souhaité) a pour coefficient 20 mA par volt.

Le levier de commande de la crémaillère transforme lui la rotation de l'actionneur 3199 (21,7°) en translation de crémaillère (26 mm) soit à un coefficient de 1,2 mm/degré.

La rotation de l'arbre de sortie de l'actionneur du type 3199 est de 21,7° pour une plage de courant d'entrée de 20 à 160 mA soit 140 mA.

On prend en compte en plus de la constante de temps annoncée par le fournisseur de 90 ms, d'un deuxième ordre correspondant au distributeur pilote (ensemble masse-ressort de ce dispositif) dont on suppose ici que la fréquence propre est à 10 hertz et l'amortissement réduit à 0,25 (amplification de 2 à la résonnance) afin de tenir compte d'un déphasage normal apporté par ce dispositif.

On a donc:

$$F(p) = \frac{0,155}{1 + 0,09\,p} \times \frac{1}{1 + 0,5\,p/60 + (p/60)^2} \text{ degré par mA}$$

Le régulateur 37 présente une fonction de transfert du type:

$$C(p) = G\frac{1 + Tip}{Tip}$$

où

$$P = j\omega \text{ (variable),}$$

G représente le gain (proportionnelle) et Ti la constante de temps intégrale.

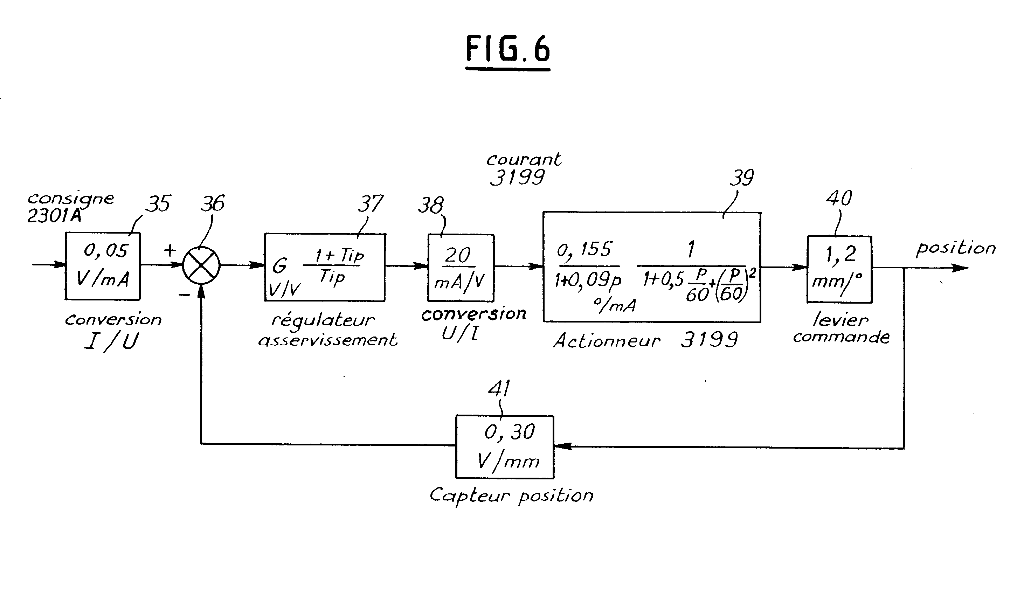

Ceci permet d'obtenir le schéma synoptique représenté sur la Fig. 6 correspondant à celui de la Fig. 5 et dans lequel ont été reportées les différentes fonctions de transfert évoquées précédemment.

Lors de la mise au point du dispositif, il est recherché le critère de la surtension maximale dans le plan de BLACK et on se limite à une surtension de 1 dB pour tenir compte des déphasages non considé-rés explicitement dans les fonctions de transfert du schéma synoptique représenté sur la Fig. 6.

La fonction de transfert du dispositif en boucle ouverte est égale à:

$$\frac{1,12}{(1 + 0,09p)\,[1 + 0,05\,P/60 + (P/60)^2]} \qquad G\frac{1 + Tip}{Tip}$$

Le réglage choisi est :

Ti = 0,2 seconde

G = 1,35

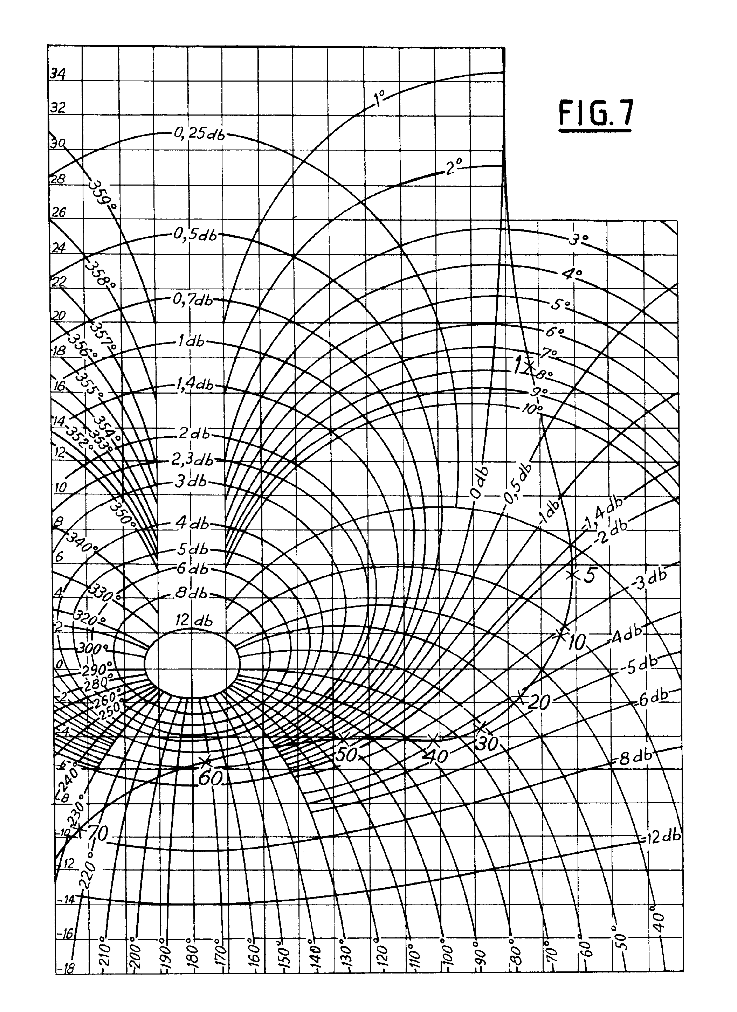

Ce qui conduit à la représentation de BLACK de la Fig. 7.

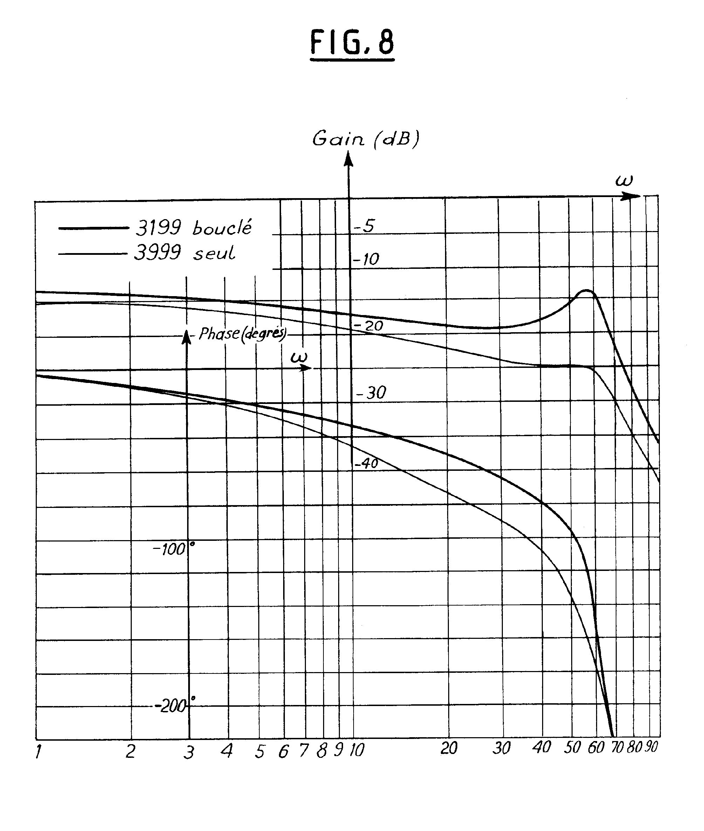

Le diagramme de BODE donné à la Fig. 8 montre que la dynamique de l'actionneur bouclé sur son asservissement de position (en trait fort) est meilleure que lorsqu'il est seul (en trait fin).

Ceci prouve que l'introduction d'une boucle fermée d'asservissement de position ne détériore en aucune façon les performances de la régulation de vitesse et permet donc d'obtenir un dispositif dont les caractéristiques de régulation de vitesse ne sont pas dégradées mais dont les caractéristiques de répartition de charge sur les moteurs sont très fortement améliorées par rapport à celles d'un dispositif connu.

## Revendications

1. Dispositif de commande du fonctionnement d'au moins deux moteurs thermiques (1, 2) accouplés sur un même arbre d'entraînement (3) d'un alternateur (4), comportant des moyens (5) de régulation de la vitesse de rotation des moteurs (1, 2) et des moyens (6, 7) de réglage de la position d'un organe (8, 9) de commande de l'injection de carburant dans chaque moteur, commandés à partir d'un signal de sortie des moyens de régulation (5), caractérisé en ce qu'il comporte des moyens (10, 11) d'asservissement en boucle fermée pour chaque organe de commande (8, 9), recevant en entrée le même signal de sortie des moyens de régulation (5) ce qui permet d'asservir la position de chaque organe de commande (8,9) au même signal de sortie des moyens de régulation (5).

2. Dispositif selon la revendication 1, caractérisé en ce que les moyens d'asservissement (10, 11) sont à correcteur du type intégral.

3. Dispositif selon la revendication 1 ou 2, caractérisé en ce que les moyens d'asservissement (10, 11) comprennent pour chaque moteur (1, 2), des moyens (12, 13) de détermination de la position réelle de l'organe de commande correspondant (8, 9) et des moyens de comparaison (14, 15) du signal de sortie de ces moyens de détermination (12, 13) à un signal de sortie des moyens de régulation (5), représentatif de la position théorique voulue, la sortie des moyens de comparaison (14, 15) étant reliée aux moyens de réglage (6, 7), pour compenser tout écart entre les positions réelle et théorique voulue.

4. Dispositif selon l'une quelconque des revendications précédentes, caractérisé en ce que les moyens (10, 11) d'asservissement de chaque organe de commande (8, 9) reçoivent le même signal de sortie des moyens de régulation.

## Patentansprüche

1. Betriebssteuerungsvorrichtung zumindest zweier Verbrennungsmotoren (1, 2), die über eine einzige Antriebswelle (3) eines Wechselstromgenerators (4) gekoppelt sind, mit Einstelleinrichtungen (5) zum Einstellen der Drehzahl der Motoren (1, 2) und mit Stelleinrichtungen (6, 7) für die Position eines Stellglieds (8, 9) für die Einspritzung von Kraftstoff in jeden Motor gesteuert durch ein Ausgangssignal der Einstelleinrichtungen (5), **gekennzeichnet durch** Regelungseinrichtungen (10, 11) mit geschlossener Regelschleife für jedes Stellglied (8, 9), die am Eingang dasselbe Ausgangssignal der Einstelleinrichtung (5) erhalten, was es erlaubt, die Position jedes Stellglieds (8, 9) durch dasselbe Ausgangssignal der Einstelleinrichtungen (5) einzustellen.

2. Vorrichtung nach Anspruch 1, **dadurch gekennzeichnet, daß** die Regelungseinrichtungen (10, 11) Integralregler sind.

3. Vorrichtung nach einem der Ansprüche 1 oder 2, **dadurch gekennzeichnet, daß** die Regelungseinrichtungen (10, 11) für jeden Motor (1, 2) Bestimmungseinrichtungen (12, 13) für die Istposition des zugehörigen Stellglieds (8, 9) und Vergleichseinrichtungen (14, 15) zum Vergleichen des Ausgangssignals der Bestimmungseinrichtungen mit dem Ausgangssignal der Einstelleinrichtungen (5), das für die theoretische Sollposition repräsentativ ist, aufweisen, wobei der Ausgang der Vergleichseinrichtungen (14, 15) mit den Stelleinrichtungen (6, 7) verbunden ist, um jede Abweichung zwischen der Ist- und der theoretischen Sollposition zu kompensieren.

4. Vorrichtung nach einem der vorstehenden Ansprüchen, **dadurch gekennzeichnet, daß** die Regelungseinrichtungen (10, 11) jedes Stellglieds (8, 9) dasselbe Ausgangssignal der Einstelleinrichtungen erhalten.

## Claims

1. Device for controlling the operation of at least two thermal engines (1,2) coupled to the same drive shaft (3) of an alternator (4), comprising means (5) for regulating the rotational speed of the engines (1,2) and means (6,7) for adjusting the position of a member (8,9) controlling the injection of fuel into each engine, which are controlled in response to an output signal from the regulating means (5), characterised in that it has closed-loop servo-control means (10,11) for each control member (8,9), receiving as an input signal the same output signal from the regulating means (5),
thereby making it possible to servo-control the position of each control member (8,9) by means of the same output signal from the regulating means (5).

2. Device according to Claim 1, characterised in that the servo-control means (10,11) comprise a controller of the integral type.

3. Device according to Claim 1 or 2, characterised in that the servo-control means (10,11) comprise, for each engine (1,2), means (12,13) for determining the actual position of the corresponding control member (8,9) and means (14,15) for comparing the output signal from these determining means (12,13) with an output signal from the regulating means (5) which represents the desired theoretical position, the output of the comparison means (14,15) being connected to the regulating means (6,7), in order to compensate any deviation between the actual position and the desired theoretical position.

4. Device according to any one of the preceding claims, characterised in that the servo-control means (10,11) for each control member (8,9) receive the same output signal from the regulating means.

**FIG.1**

**FIG.2**

FIG.3

FIG.4

EP 0 434 490 B1

FIG. 5

EP 0 434 490 B1

# FIG.6

*consigne*
*2301A*

**35** Conversion $\dfrac{0,05}{V/mA}$ I/U

**36**

**37** régulateur $G \dfrac{1+Tip}{Tip}$ V/V asservissement

**38** conversion $\dfrac{20}{mA/V}$ U/I

*courant 3199*

**39** Actionneur 3199 $\dfrac{0,155}{1+0,09p} \cdot \dfrac{1}{1+0,5\dfrac{P}{60}+\left(\dfrac{P}{60}\right)^2}$ °/mA

**40** levier commande $\dfrac{1,2}{mm/°}$

*position*

**41** Capteur position $\dfrac{0,30}{V/mm}$

FIG.7

# FIG. 8